Europäisches Patentamt

European Patent Office

Office européen des brevets

(11) Publication number: **0 352 901 B1**

## EUROPEAN PATENT SPECIFICATION

(45) Date of publication of patent specification: **30.08.95**

(51) Int. Cl.⁶: **C09J 7/02**, C09J 133/08, C09J 151/04

(21) Application number: **89306294.3**

(22) Date of filing: **22.06.89**

(54) **Pressure-sensitive adhesive tapes.**

(30) Priority: **28.06.88 US 210712**

(43) Date of publication of application:
**31.01.90 Bulletin 90/05**

(45) Publication of the grant of the patent:
**30.08.95 Bulletin 95/35**

(84) Designated Contracting States:
**BE DE ES FR GB IT SE**

(56) References cited:
**EP-A- 0 044 166**
**EP-A- 0 238 863**
**EP-A- 0 303 430**

(73) Proprietor: **MINNESOTA MINING AND MANU-FACTURING COMPANY**
**3M Center,**
**P.O. Box 33427**
**St. Paul,**
**Minnesota 55133-3427 (US)**

(72) Inventor: **Everaerts, Albert I.**
**Minnesota Mining & Manufact. Co., P.O. Box 33427,**
**St. Paul,**
**Minnesota 55133 (US)**

Inventor: **Kinning, David J.**
**Minnesota Mining & Manufact. Co., P.O. Box 33427,**
**St. Paul,**
**Minnesota 55133 (US)**
Inventor: **Purgett, Mark D.**
**Minnesota Mining & Manufact. Co., P.O. Box 33427,**
**St. Paul, Minnesota 55133-3427 (US)**
Inventor: **Smolders, Robert R.L.**
**Minnesota Mining & Manufact. Co., P.O. Box 33427,**
**St. Paul, Minnesota 55133-3427 (US)**
Inventor: **Bogaert, Yvan A.**
**Minnesota Mining & Manufact. Co., P.O. Box 33427,**
**St. Paul, Minnesota 55133-3427 (US)**

(74) Representative: **Baillie, Iain Cameron et al**
**c/o Ladas & Parry**
**Altheimer Eck 2**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 352 901 B1

## Description

This invention relates to the use of pressure-sensitive adhesive compositions and adhesive tapes, specifically acrylic-based pressure-sensitive adhesives having improved adhesion to paint and low temperature damping properties.

Acrylate pressure-sensitive adhesives are well known in the art. In U.S. Patent No. Re 24,906 (Ulrich), alkyl acrylate copolymers are described which are predominately alkyl esters of acrylic acid having from 4 to 14 carbon atoms, and further comprise a minor amount (3-12%, preferably 4-8%) of a polar copolymerizable monomer such as acrylic acid. Such adhesives are widely popular as they are readily available and provide a good balance of tack, shear and peel properties on a variety of substrates at a relatively low cost.

These adhesives have been used for various automotive applications, e.g., attachment of decorative items to the painted surface. Automotive industry testing of adhesives typically subjects adhesives to pass a shock test, known in the industry as a "cold slam" test, at temperatures down to -45°C. Conventional acrylate adhesives have difficulty passing such tests when attached to new high solids paints systems which are increasingly used in the automotive industry. Adhesion to such paints is also reduced as compared to older paints.

U.S. Patent No. 4,181,752 (Martens et al) discloses a process for ultraviolet photopolymerization of alkyl acrylate esters and polar copolymerizable monomers to form the acrylate copolymer. Martens teaches that intensity and spectral distribution of the irradiation must be controlled in order to attain desirable cohesive strengths and peel resistance. The photopolymerization is preferably carried out in an inert atmosphere as oxygen tends to inhibit the reaction. Adhesive properties for tapes made via the Martens process are improved over those made by solution polymerization, but are still not adequate for the more demanding automotive applications.

Additional patents disclose ultraviolet radiation of acrylate adhesives. U.S. Patent No. 4,364,972 (Moon) discloses the use of N-vinyl-2-pyrrolidone as the polar copolymerizable monomer in the acrylate adhesive copolymer. High adhesion to automotive paints is disclosed but not exemplified. U.S. Patent No. 4,391,687 (Vesley) discloses the use of specific chromophore-substituted-halomethyl-s-triazines as photoactive crosslinkers for acrylate copolymers. U.S. Patent No. 4,599,265 (Esmay) discloses a readily peelable pressure-sensitive adhesive tape, the adhesive layer of which is highly crosslinked and low in polar monomer content.

U.S. Patent No. 4,243,500 (Glennon) discloses a pressure-sensitive adhesive formed from a composition comprising at least one monofunctional unsaturated acrylate ester monomer, saturated tackifying resin polymers, non-crystallizing elastomeric material, and an initiator responsive to ultraviolet light or other penetrating radiation. Glennon specifies the use of UV light within a wavelength range of 1800-4000 Angstroms. The intensity of the lamps to which the adhesive is exposed is much higher than that of the lamps disclosed in Martens et al.

Glennon states that the elastomer may be any natural or synthetic elastomer which is soluble in the acrylate ester monomer and which is of a non-crystallizing amorphous nature. The elastomer is present in from about 4 parts to about 150 parts per hundred parts acrylate monomer. The Glennon adhesive also requires the use of from about 50 parts to about 250 parts of tackifying resin per hundred parts acrylate ester monomer in order to obtain a satisfactory adhesion level to metal and painted steel substrates. Such levels of tackifier increase the glass transition temperature of the polymer matrix which has a negative effect on low temperature flexibility, and act as chain transfer agents during the polymerization.

Canadian Patent No. 1,192,688 (Moser et al.) discloses an adhesive composition comprising an acrylic monomer yielding a polymer with a glass transition temperature between 0°C and 100°C and at least one dispersible core-shell polymer, said composition being a 100% reactive fluid adhesive. Such adhesives cannot be used in pressure-sensitive adhesive tapes.

European Patent Application, Publication No. 238863, (Klingler et al.) discloses a radiation or heat cured elastomer which exhibits enhanced physical properties by virtue of its cure resulting in phase segregation. The elastomer is dissolved in a methacrylate monomer in the presence of a photoinitiator or thermal initiator. The composition may also contain up to 20% by weight of a reactive acrylic diluent. Operable block copolymers include styrene/elastomer block copolymers, polyurethane block copolymers and polyester/polyether block copolymers. Acrylates analogous to the useful methacrylates are disclosed to yield a transparent non-phase-segregated product which exhibits markedly inferior physical properties.

U.S. Patent No. 4,126,504, (Wolinski et al.) discloses a two-part fast curing adhesive wherein the first part is made up of a thermoplastic non-reactive elastomeric polymer dissolved in a free-radical addition polymerizable combination of an acrylic or methacrylic monomer, a copolymerizable monomer containing at

EP 0 352 901 B1

least one free carboxylic acid group, and a non-activated free radical addition polymerization catalyst system. The second part comprises an activator system for the free radical catalyst system, and optional accelerator for such system. In one modification, the activator may be encapsulated into insoluble, rupturable microspheres to form a single liquid adhesive. The adhesives disclosed in Wolinski must be applied to one surface, and the activator applied to the other surface, or in the case of single liquid adhesive, you must still add a catalyst at the time of use. The adhesives are therefore not appropriate for use in pressure-sensitive adhesive tapes.

U.S. Patent 3,832,274, (Owston) discloses fast-curing structural adhesives comprising (a) from about 1 to about 30% of an elastomer selected from poly(butadiene) homopolymer, copolymers of butadiene with at least one copolymerizable monomer such as styrene, acrylonitrile and methacrylonitrile, and a copolymer of butadiene selected from the group consisting of homopolymer and copolymer modified by inclusion of up to 5% of a functional monomer; (b) 25% to 85% of at least one polymerizable acrylic monomer selected from acrylates methacrylates, acrylonitrile and methacrylonitrile, (c) 0 to 50% of an ethylenically unsaturated non-acrylic monomer, (d) polymers having intrinsic viscosity in the range from about 0.1 to 1.3, derived from (b) or (c), (e) 5% to 20% of methacrylic acid, and (f) 0.04% to 4% of the reducing component of a redox catalyst polymerization system. The oxidizing component of such catalyst system must be added within fifteen minutes of cure time after the adhesive is in place. The adhesives are structural cements, and are not suitable for use in pressure-sensitive adhesive tapes.

The inventors of the present invention have now discovered that certain ultraviolet-radiation polymerized phase-separated pressure-sensitive adhesives comprising an acrylic copolymer, and a hydrocarbon elastomer, or blend of hydrocarbon elastomers, each elastomer having at least one segment with a glass transition temperature lower than that of the acrylic copolymer, yields an adhesive tape having excellent adhesion to high solids paints as well as improved cold shock performance.

This is especially surprising as phase-separated adhesives would be expected to show reduced adhesion due to detackification of the surface by the elastomer. This should be exacerbated on substrates to which adhesion is difficult, such as the high solids paints. Surprisingly, the phase-separated adhesive tapes of the invention show greatly increased adhesion to high solids paints, and improved cold slam such that they perform well even at extremely low temperatures.

## Summary of the Invention

The present invention provides use on a tape as pressure-sensitive adhesive of a phase-separated ultraviolet-radiation polymerized pressure-sensitive adhesive layer comprising

a) from 65 parts to 95 parts of an acrylic copolymer of monomers containing:

i. from 60 to 90 parts of an alkyl acrylate monomer, the alkyl groups of which have an average of 4 to 12 carbon atoms,

ii. correspondingly, from 40 parts to 10 parts of a monoethylenically unsaturated polar copolymerizable monomer, and

iii. from 0.01 part to 1 part of a photoinitiator, and

b) correspondingly, from 35 parts to 5 parts of a hydrocarbon elastomer or blend of hydrocarbon elastomers, each of said elastomers comprising at least one unsaturated segment having a lower $T_g$ than said acrylic copolymer,

said adhesive layer having at least a first phase and a second phase, said first phase consisting primarily of said elastomer, said second phase consisting primarily of said acrylic copolymer, wherein said pressure-sensitive adhesive tape has improved adhesion to painted surfaces and low temperature shock performance than an otherwise identical adhesive tape wherein the adhesive layer contains no hydrocarbon elastomer. The first phase preferably is a continuous phase.

The invention provides pressure-sensitive adhesive tapes exhibiting both improved adhesion to painted surfaces and "cold slam" performance, without loss of other critical properties.

Preferred pressure-sensitive adhesive tapes of the invention tape also comprise a core layer, preferably an acrylic core layer. In a highly preferred embodiment, the core layer contains a single-phase ultraviolet-radiation polymerized acrylic copolymer of monomers containing

a) from 85 parts to 99 parts of an alkyl acrylate monomer, the alkyl groups of which have an average of 4 to 12 carbon atoms, and

b) correspondingly, from 15 parts to 1 part of a monoethylenically unsaturated strongly polar copolymerizable monomer.

3

Description of the Electron Micrographs

In the following electron micrographs, the bar scale present in the lower right hand corner of each figure represents one micron.

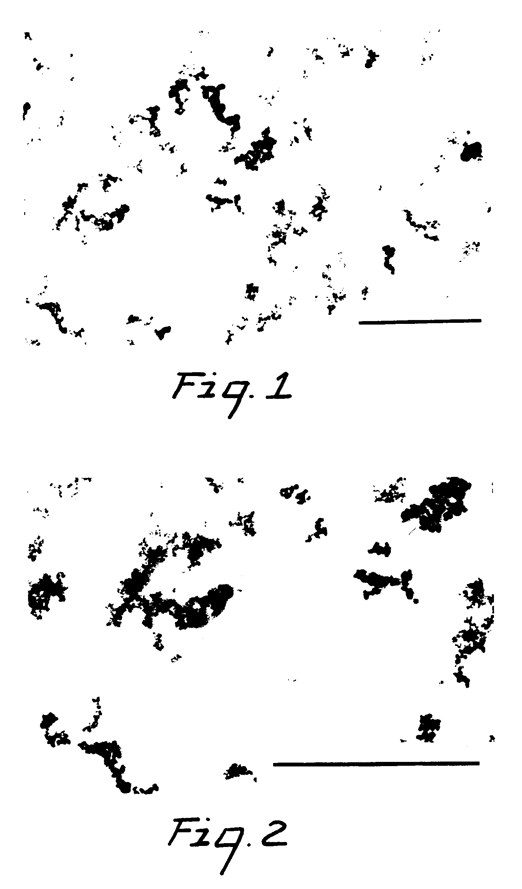

Figure 1 shows the morphology of an acrylate pressure-sensitive adhesive polymer having the following composition, 91 parts isooctyl acrylate (IOA), 9 parts acrylic acid (AA), 0.18 part Irgacure™ 651 photoinitiator, 0.11 part 1,6-hexanediol diacrylate (HDDA), and 4 parts Aerosil™ R972 hydrophobic silica filler, but having no elastomer. The adhesive has but a single phase. The silica filler can be seen as dark particles in the light featureless IOA/AA matrix.

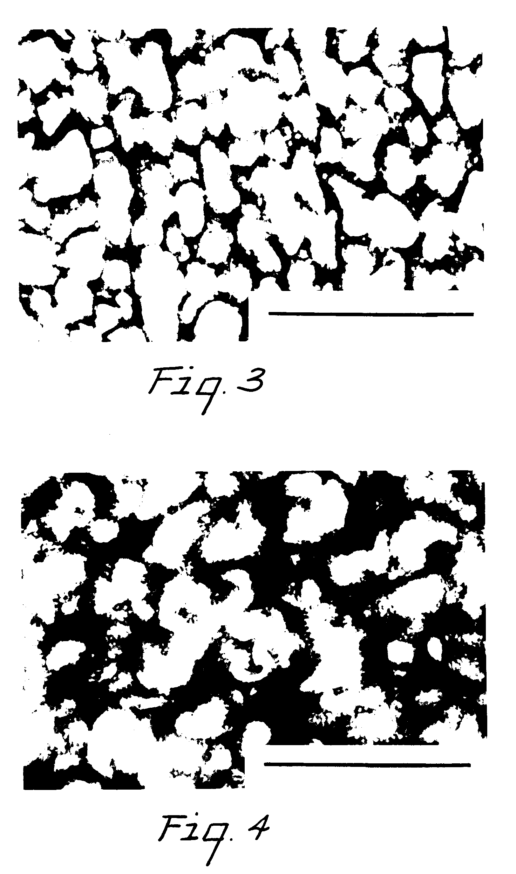

Figure 2 shows the same composition as Figure 1, but at a higher magnification. The single acrylic phase is featureless, except for the presence of the filler.

Figure 3 shows the morphology of a phase-separated adhesive of the invention containing 85 parts IOA, 15 parts AA, 0.18 part Irgacure™ 651, and 20 weight percent Stereon™ 845A, an elastomer containing unsaturated segments. The elastomer phase is darkly stained and appears continuous. The acrylic copolymer phase is light, and consists of relatively uniform inclusions averaging 0.5 micrometer in size.

Figure 4 shows the morphology of another phase-separated adhesive composition of the invention comprising 85 parts IOA, 15 parts AA, 0.18 part Irgacure™ 651 photoinitiator, and 20 weight percent Duradene™ 710, another elastomer having unsaturated segments. Again, the elastomer phase is the darkly stained continuous phase. The acrylate phase exists as relatively uniform inclusions of about 0.5 micrometer.

Detailed Description of the Invention

The acrylic copolymers useful in the adhesive layer of the invention constitute from 65 to 95 parts per hundred resin (phr) of the pressure-sensitive adhesive compositions of the invention. The acrylic copolymers contain at least one alkyl acrylate monomer, preferably a monofunctional unsaturated acrylate ester of non-tertiary alkyl alcohol, the molecules of which have from 4 to 14 carbon atoms. Such monomers include, e.g., isooctyl acrylate, 2-ethyl hexyl acrylate, isononyl acrylate, decyl acrylate, dodecyl acrylate, butyl acrylate, and hexyl acrylate. The acrylic polymers contain from 60 to 90 parts of the alkyl acrylate monomer. The alkyl acrylate monomers are polymerized with at least one polar copolymerizable monomer.

The polar copolymerizable monomer is selected from strongly polar monomers such as acrylic acid, acrylamide, itaconic acid, hydroxyalkyl acrylates, or substituted acrylamides or moderately polar monomers such as N-vinyl-2-pyrrolidone, N-vinyl caprolactam, and acrylonitrile.

The level of the polar monomer is critical to the compositions of the adhesive layers. If the level of the polar monomer is too low, the peel adhesion of the adhesive to painted surfaces drops significantly. If the level of the polar monomer is too high, the adhesive begins to lose tack. Where strongly polar monomers are used, they comprise from 10 parts to 25 parts, preferably from 10 to 20 parts of the acrylic copolymer. Where moderately polar monomers are used, they comprise from 20 to 40 parts of the acrylic copolymer.

Elastomers useful in compositions of the invention are those hydrocarbon elastomers which phase-separate when in the presence of the photopolymerized acrylic copolymers. These elastomers include at least one unsaturated low $T_g$ segment. Low $T_g$, as used herein, means that the segment so defined has a glass transition temperature lower than that of the acrylic copolymer. Typical $T_g$ values for acrylic copolymers are 0°C or lower. Low $T_g$ segments or polymers have $T_g$ values of less than 0°C, preferably in the range of from -50°C to -70 °C, more preferably less than -70°C. Preferred elastomers include (S-B)n styrene-butadiene multiblock copolymers such as Stereon™ 840A and Duradene™ 710, available commercially from Firestone Chemical Co., Kraton™ D1101, available commercially from Shell Chemical Co., and Europrene SOL™ T 163 and SOL™ T 166, available commercially from Enichem. The addition of elastomers having unsaturated segments to acrylic copolymers yields phase-separated pressure-sensitive adhesives wherein the elastomer phase is a continuous phase and the acrylic copolymer phase exists as relatively uniform inclusions ranging in size from 0.1 micrometer to 1 micrometer. A pressure-sensitive adhesive tape having an adhesive layer comprising such a composition provides substantial improvement in both peel adhesion to painted surfaces and cold slam properties while maintaining acceptable values for other adhesive properties such as shear.

The pressure-sensitive adhesive tapes of the invention exhibit significantly improved adhesion to the newer automotive paints. Such paints are high solids paint systems designed to reduce pollution, and retain durability and high gloss finishes. They have surfaces which are less reactive with various pollutants in the air, and also less reactive with adhesives. Conventional adhesives have greatly reduced adhesion to such paints as compared to older paint formulations. Some examples of this type of automotive paint include Inmont paints "E-14", and "M337-100", DuPont paints "E-176", and "RK-3840", and Ford "50-J".

Without wishing to be bound by theory, it is believed that these pressure-sensitive adhesive tapes exhibit improvements in high-solids paint adhesion and cold slam because their unique morphologies exhibit both the efficient damping and conformability of the elastomer in continuous phase, and the excellent chemical interaction of the acrylic copolymers with painted substrates. The adhesive properties of acrylic copolymers are described in U.S. Patent Nos. RE 24,906, (Ulrich), 4,181,752, (Martens) and 4,223,067, (Levens).

When a composition incorporating such an elastomer is examined by Transmission Electron Microscopy (TEM), the phase-separated morphology is clearly visible. The elastomeric phase is continuous, and the acrylic copolymer phase exists as uniform inclusions of 0.1 micrometers to 1 micrometer in size, 0.5 micrometer when highly preferred elastomers such as Duradene™ 710 are utilized.

While the composition and structure of the elastomer are also factors in determining the final properties of the pressure-sensitive adhesive tape made therewith, it is difficult to fully characterize useful elastomers due to the limited information available on these proprietary compounds. Butadiene is a preferred low $T_g$ segment. Pressure-sensitive adhesive tapes having adhesive layers containing elastomers wherein isoprene constitutes the low $T_g$ segment such as the Europrene SOL™ 190 series do not exhibit increased adhesion to painted surfaces. Further, a certain amount of "block" structure seems to be essential in the elastomer. Elastomers having more random structure such as Duradene™ 711 and 713 also fail to show the increased adhesion. Pressure-sensitive adhesive compositions of the invention comprise from 5 phr to 35 phr of the hydrocarbon elastomer, preferably from 10 to 25 parts.

When blends of elastomers are used, each elastomer must meet the requirements stated above, i.e., unsaturated, low $T_g$ segment.

Preferred pressure-sensitive adhesive compositions of the invention also exhibit improved cold temperature performance when subjected to "cold slam" testing at temperatures of between -30°C and -45°C.

The mixture of the polymerizable monomers and the elastomer also contains a photoinitiator to induce polymerization of the monomers. Photoinitiators which are useful include the benzoin ethers such as benzoin methyl ether or benzoin isopropyl ether, substituted benzoin ethers such as anisole methyl ether, substituted acetophenones such as 2,2-diethyoxyacetophenone and 2,2-dimethoxy-2-phenylacetophenone, substituted alpha-ketols such as 2-methyl-2-hydroxypropiophenone, aromatic sulfonyl chlorides such as 2-naphthalene sulfonyl chloride, and photoactive oximes such as 1-phenyl-1,1-propanedione-2-(0-ethoxycarbonyl)-oxime. The photoinitiator is present in an amount of 0.01 to 1 phr of the instant pressure-sensitive adhesive compositions.

The mixtures of the elastomer and the photopolymerizable monomers may also contain a crosslinking agent. Preferred crosslinking agents for an acrylic pressure-sensitive adhesive are multifunctional acrylates such as 1,6-hexanediol diacrylate as well as those disclosed in U.S. Patent No. 4,379,201 (Heilmann et al.), such as trimethylolpropane triacrylate, pentaerythritol tetracrylate, 1,2-ethylene glycol diacrylate, and 1,2-dodecanediol diacrylate. Other useful crosslinking agents include the substituted triazines, such as those disclosed in U.S. Patent Nos. 4,329,384 and 4,330,590 (Vesley), e.g., 2,4-bis(trichloromethyl)-6-p-methoxystyrene-5-triazine and the chromophore halomethyl-5-triazines. When used, the crosslinking agent is present in an amount of from 0.01 to 1 phr.

Preferred tapes of the invention also have a backing or core layer. The core layer may consist of such materials as acrylates, polyethylenes, polypropylenes, neoprenes, polyolefins, polyurethanes, silicones, etc.

In a highly preferred embodiment, the core layer consists of an ultraviolet-radiation polymerized acrylic copolymer which may incorporate similar or dissimilar acrylic monomers in like or unlike thicknesses, having similar or different additives from those acrylic copolymers contained in the adhesive layer. The core layers preferably comprise 90 parts, most preferably at least 95 parts of an alkyl acrylate polymer, and correspondingly, up to about 10 parts, most preferably up to about 5 parts of a strongly polar copolymerizable monomer.

Such core layer may be a foam-like layer, e.g., a monomer blend comprising microspheres may be used. The microspheres may be glass or polymeric. The microspheres should have an average diameter of 10 to 200 micrometers, and comprise from 5 to 65 volume percent of the core layer. The thickness of foam-like layers in preferred tapes of the invention range from 0.3 mm to 4.0 mm in thickness.

Especially preferred microspheres are polymeric microspheres, such as those described in U.S. Patent Nos. 3,615,972, 4,075,238, and 4,287,308. The microspheres are available from the Pierce & Stevens Company under the trade name "Microlite" in unexpanded form and "Miralite" in expanded form. Similar microspheres are available from Kema Nord Plastics under the trade name "Expancel" and from Matsumoto Yushi Seiyaku under the trade name "Micropearl". In expanded form, the microspheres have a specific density of approximately 0.02-0.036 g/cc. It is possible to include the unexpanded microspheres in the core layer and subsequently heat them to cause expansion, but it is generally preferred to mix in the expanded microspheres. This process ensures that the hollow microspheres in the final core layer are substantially surrounded by at least a thin layer of adhesive.

Preferred glass microspheres have average diameters of 80 micrometers. When glass microspheres are used, the pressure-sensitive adhesive layer should be at least 3 times as thick as their diameter, preferably at least 7 times. The thickness of layers containing such glass microspheres should be at least six times, preferably at least twenty times that of each microsphere-free layer.

Other useful materials which can be blended into the pressure-sensitive adhesive layer or the core layer include, but are not limited to, fillers, pigments, plasticizers, tackifiers, chain transfer agents, fibrous reinforcing agents, woven and nonwoven fabrics, foaming agents, antioxidants, stabilizers, fire retardants, and viscosity adjusting agents.

An especially useful filler material is hydrophobic silica as disclosed in U.S. Patents No. 4,710,536 and 4,749,590, (Klingen et al.) . In one preferred embodiment of the present invention, the pressure-sensitive adhesive layer further comprises from 2 to 15 phr of a hydrophobic silica having a surface area of at least 10 $m^2$/g.

Chain-transfer agents are also preferred additives for adhesive layers of tapes of the invention. Various types of chain-transfer agents are useful including mercaptans, certain rosin ester based tackifying agents, certain antioxidants, etc. The amount of chain-transfer agent to be added depends on the type selected, e.g., from 0.05 phr to 1 phr when using a mercaptan.

The pressure-sensitive adhesive composition is preferably prepared by dissolving or dispersing the elastomer into the alkyl acrylate monomer, and then adding the polar copolymerizable monomer, and photoinitiator. Optional crosslinking agent or other additives may also be incorporated into the syrup.

This composition is coated onto a flexible carrier web and polymerized in an inert, i.e., oxygen free, atmosphere, e.g., a nitrogen atmosphere. A sufficiently inert atmosphere can be achieved by covering a layer of the photoactive coating with a plastic film which is substantially transparent to ultraviolet radiation, and irradiating through that film in air using fluorescent-type ultraviolet lamps. If, instead of covering the polymerizable coating, the photopolymerization is to be carried out in an inert atmosphere, the permissible oxygen content of the inert atmosphere can be increased by mixing into the polymerizable monomer an oxidizable tin compound as taught in U.S. Patent No. 4,303,485 (Levens), which also teaches that such procedures will allow thick coatings to be polymerized in air.

The elastomers appear to be dispersible with the ultraviolet-radiation polymerizable monomers when originally mixed. However, phase-separation is already present on a microscale, and as the monomers are reacted on the carrier web, the elastomer chains become less dispersible in the growing acrylic copolymer chains, resulting in increased degree of phase-separation. Because elastomers having at least one unsaturated segment are used, chemical crosslinking/grafting between the polymer chains and the unsaturated segments hinders large scale rearrangement of the initial phase separated structure, resulting in a high level of interconnectivity of the phases and the unique morphologies and resulting properties observed for these systems.

Testing Procedures

The following tests have been used to evaluate adhesives of the invention. All percentages, parts and ratios are by weight unless specifically stated otherwise.

Analysis of Adhesive Morphology by Transmission Electron Microscopy

Thin sections (50-100 nm) (500-1000 Angstroms) for TEM testing were prepared at a sample temperature of -140°C using a Reichert-Jung™ Ultracut E™ ultramicrotome equipped with an FC4 cryoattachment. A Diatome™ diamond knife with a stainless steel boat was employed. The sections were floated off onto n-propanol and collected on 700 mesh copper grids, which were then exposed to the vapors of a 4% aqueous solution of osmium tetroxide for 4 hours. (The osmium tetroxide reacts with the double bonds in the rubber segment of the elastomer; rendering the rubber segments dark in the micrographs.) The stained sections were then examined using a JEOL 100 CX electron microscope in transmission mode operated at 100 kV.

90° Peel Adhesion

A strip of anodized aluminum 19 mm x 200 mm x 0.125 mm is positioned on one adhesive face of the tape sample. Pressure is applied to the aluminum by rolling with a 2 kg roller. The opposite face of the sample is then firmly bonded to a rigid painted substrate. After the specified dwell time, the sample is removed by pulling the aluminum strip at 90° to the adhesive surface at a speed of 30.5 cm/minute, noting the average adhesion in N/dm width, and the failure mode. Foam split (FS) is the most desirable failure mode as it indicates adhesion to the substrate is stronger than the internal strength of the core layer.

Cold Slam

A rigid vertical steel frame approximately 40 cm square is provided at its upper edge with a similar dimensioned hinged frame/door. 19.4 square cm (2.54 cm x 7.62 cm) of medium density silicone foam is mounted at the lower outer edge of the fixed vertical frame (where the hinged door impacts when slammed).

Test panels are prepared as follows:

A 12.7 mm x 125 mm pressure sensitive attachment tape, carried on a release liner, is applied to the 15 mm x 150 mm face of a rigid polyvinyl chloride test bar which is 6 mm thick. The tape is pressed into place by rolling once with a 6.8 kg roller. The liner is then removed from the tape, and the exposed surface attached to a freshly painted steel panel which is 100 mm x 300 mm. Four test bars are attached, in two rows, in the lengthwise direction of the steel panel, with one end of each test bar extending beyond the end of the panel approximately 2.5 cm. After rolling the test panel with a 6.8 kg roller at a rate of 300 mm/min, the panel is allowed to dwell for 3 days at ambient temperature. The specimen is then conditioned at -30°C for approximately 12 hours in the cold chamber, which houses the cold slam fixture as described above. The test panel is then secured in the fixture, with the test bars and the long dimension of the panel mounted in a horizontal direction.

The following test procedure was designed so that some quantitative estimate of cold slam performance could be obtained, rather than simply a pass-fail rating.

The cold slam test is conducted by raising the hinged "door" to a predetermined angle, and releasing it, allowing it to strike the frame and expose the test panel to a cold shock. Ten slams are conducted at each of the five possible slam angles. The slam angle and the number of the slam (1-10) during which any of the four vinyl bars becomes delaminated or detached is recorded. A slam angle of 23 degrees is used initially. If there has been no failures after ten slams at this angle, the angle is increased to 45 degrees. This procedure is repeated until all test bars become detached, or until ten slams at the 180 degree slam angle has been conducted. If failure of one or more bars does occur at a specific stage during the initial ten slams, an additional 10 slams is conducted at that stage before advancing to the next slam angle. The results are recorded by documenting the door slam angle/stage and slam number in which delamination begins, or failure occurs. Numerical designation in the form of stages 1-5 correspond to door slam angles of 23, 45, 68, 90 and 180 degrees respectively. Again, alphabetical designation is assigned as follows: E = slams 1 through 3 of ten; M = slams 4-7 of ten; L = slams 8-10 of 10. LL = slams 10-20 of 20. The failure mode is also recorded.

The following examples are to be considered as illustrative in nature, and are not limiting in any way. The scope of the invention is that which is defined in the claims only.

Examples

The following terminology, abbreviations and elastomer trade names are used in the examples:

Glossary

Reference Construction - One of various high performance acrylic tape constructions of the prior art provided to show comparative performance of such formulations.

Control - A tape having the same base formulation as key tapes of the invention, but containing no elastomer, provided to demonstrate the effect of elastomer incorporation.

Abbreviations

IOA - isooctyl acrylate
AA - acrylic acid
NVP - N-vinyl-2-pyrrolidone
$T_g$ - glass transition temperature
RT - room temperature

POP - pop off panel, no residue remaining
FS - foam split
AD - adhesive delamination
tr - trace

Elastomers

| | |
|---|---|
| Duradene™ 710 | a "blocky" butadiene styrene copolymer having 27% styrene, available from Firestone |
| Stereon™ 845A | a styrene-butadiene multiblock copolymer with 48% styrene, available from Firestone |
| Stereon™ 840A | a styrene-butadiene multiblock copolymer with 43% styrene, available from Firestone |
| Kraton™ D1101 | an SBS block copolymer with 30% styrene, available from Shell |
| Europrene™ Sol T 163 | a (S-B)$_n$ multiblock copolymer with 30% bound styrene, and a tetra-radial branched structure; available from Enichem |
| Europrene™ Sol T 166 | a linear S-B-S copolymer with 30% bound styrene available from Enichem |
| Europrene™ Sol T 190 | a SIS copolymer with 15% bound styrene available from Enichem |
| Europrene™ Sol T 193A, 193B | SIS copolymers with 25% bound styrene, available from Enichem |
| Kraton™ G 1657 | a styrene-ethylene butylene copolymer with 14% bound styrene, available from Shell |
| Duradene™ 707 | a random solution butadiene-styrene copolymer with 24% bound styrene, available from Firestone |
| Duradene™ 711 | a random butadiene-styrene copolymer with 18% bound styrene, available from Firestone |
| Duradene™ 713 | a butadiene-styrene copolymer with 35% bound styrene, available from Firestone |
| Stereon™ 720A | a butadiene-styrene copolymer with 10% bound styrene, available from Firestone |
| Kraton™ D1107 | a SIS copolymer with 15% styrene, available from Shell |

Example 1

To a one liter glass mixing vessel equipped with a lid was charged 85 parts isooctyl acrylate (IOA) and 25 parts Duradene™ 710. This slurry was agitated on a shaker table overnight, and then stirred at moderate RPM for approximately four hours using an air driven propeller stirrer. A lid equipped with a port was utilized to permit stirring without monomer loss by evaporation. To the resulting homogeneous solution was added 15 parts acrylic acid (AA) and 0.18 part 2,2-dimethoxy-2-phenyl acetophenone photoinitiator (KB-1 from Sartomer). After stirring, this mixture was coated and cured between two liners consisting of biaxially-oriented 0.05 mm thick polyethylene terephthalate (PET) film, the facing surfaces of which had been coated with a low adhesion release agent. The knife coater setting was adjusted to provide a uniform coating thickness of 0.05 mm. The formulation was polymerized by exposure to a bank of Sylvania 40-watt ultraviolet fluorescent lamps, which provide radiation at a rate of approximately 1-2 milliwatt/cm². Total exposure was approximately 200 mj/cm² (Dynachem units). The pressure-sensitive adhesive film was laminated to an acrylic foam core. A foam-like acrylic core material was prepared as taught in U.S. Pat. No. 4,330,590 (Vesley), from a mixture of 87.5 parts IOA, 12.5 parts AA and 0.04 parts of 2,2-dimethoxy-2-phenyl acetophenone (Irgacure™ 651). To a partially polymerized syrup made from this mixture was added an additional 0.1 part Irgacure™ 651, 0.05 part 1,6-hexanediol diacrylate, 2.0 parts hydrophilic silica, and 8.0 parts glass microbubbles which have an average diameter of 50 μm (microns) and a density of 0.15 g/cm³. The thickness of the resulting core was about 1.0 mm. A primer was applied to the acrylic core and dried at 79°C (175°F) for 15 minutes in a forced air oven. The pressure-sensitive adhesive transfer tape was then heat laminated to the primed core. The resulting attachment tape construction was then evaluated in several test modes, including 90 degree peel adhesion following selected dwell times/temperatures. Test substrates included Inmont E-14 and other high solids automotive paints. Cold slam/low temperature damping analysis was also conducted. Results are included in Tables 1, 2, 4, 5, 6 and 7.

8

Reference Construction R-1

To a one liter mixing vessel equipped with lid was charged 95 parts IOA, 5 parts AA and 0.04 part KB-1 photoinitiator as described in Example 1. The resulting solution was sparked with nitrogen for 30 minutes followed by partial polymerization via exposure to Sylvania blacklight UV lamps for approximately 30 seconds. An additional 0.10 parts KB-1 and 0.10 parts 1,6-hexanediol diacrylate were then added to the syrup. The Brookfield viscosity of the resulting solution was approximately 2000 cps. Polymerization was then taken to completion, followed by lamination to a primed foam core, as described in Example 1.

Reference Construction R-2

Attachment tape construction R-2 was prepared as described in reference Example R-1, with the following components initially charged; 90 parts IOA, 10 parts AA and 0.04 parts KB-1.

Reference Construction R-3

Attachment tape construction R-3 was prepared as described in reference Example R-1, with the following components initially charged; 85 parts IOA, 15 parts AA and 0.04 parts KB-1 photoinitiator.

Reference Attachment Tape Construction R-4

A foam core (1.0 mm thick) was prepared as described in Example 1.
A pressure-sensitive adhesive transfer tape (0.05 mm thick) was laminated to both sides of the core, using a hard rubber roller.
The transfer tape was prepared as follows:
To a 1 liter mixing vessel was charged 87.4 parts IOA, 53.2 parts methyl acrylate, 11.4 parts AA, 248 parts ethyl acetate and 0.456 parts Vazo™ 64 (AIBN) initiator. This mixture was purged with nitrogen for two minutes (1 liter/min flow) and placed in a rotary water bath at 55°C for 24 hours. The inherent viscosity of the product was 1.8 dL/g in ethyl acetate. The solution was diluted with toluene to 20.7% solids, and 0.5 part of a proprietary crosslinker was added. This mixture was reverse-roll coated and cured in a forced air oven.
Prior to lamination of the transfer tape to the core, the transfer tape was primed as detailed in Example 1.

Control C-1

To a one liter mixing vessel equipped with a lid was added 85 parts IOA, 15 parts AA and 0.18 part KB-1 photoinitiator as described in Example 1. This mixture was partially polymerized as described in reference Example R-1 and cured, primed and laminated to an acrylic core base material as described in Example 1.

Control C-2

This tape was prepared as described in Control C-1, with the following ingredients charged: 70 parts IOA, 30 parts N-vinyl-2-pyrrolidone and 0.18 part KB-1 photoinitiator.

Examples 2-10

Attachment tape #2 was prepared by duplicating the formulation and procedure detailed in Example 1. Tapes 3-10 were prepared using the same procedure, but with variable loading of IOA, AA and Duradene™ 710. The amount of each of these three components in transfer tapes 3-10 is detailed in Table 3. Also included in this table are peel adhesion and cold slam test results, which illustrate that the transfer tape cited as Example 2, which has 15 wt% AA and 20 wt% Duradene™ 710, generates the highest performance in both peel adhesion and cold slam testing.

Examples 11-24

Using the procedure from Example 1, tapes #11-23 were prepared in identical fashion, but with other polymers used in place of Duradene™ 710, as described in Table 4.

9

Example 25

To a one liter mixing vessel equipped with a lid was charged 70 parts IOA and 25 parts Duradene™ 710. After mixing as described in Example 1, 30 parts N-vinyl-2-pyrrolidone and 0.18 parts KB-1 initiator were added. The attachment tape was then prepared as described in Example 1.

Example 26

To a one liter mixing vessel equipped with a lid was charged 80 parts IOA and 25 parts Duradene™ 710. After mixing as described in Example 1, 20 parts N-vinyl-2-pyrrolidone and 0.18 parts KB-1 initiator were added. The attachment tape was then prepared as described in Example 1.

Example 27

To a one liter mixing vessel equipped with a lid was charged 85 parts IOA and 33.3 parts Duradene™ 710. After mixing as described in Example 1, 15 parts AA and 0.18 part KB-1 initiator was introduced. Attachment tape #27 was then prepared according to Example 1.

Examples 28-30

Attachment tapes #28-30 were prepared using the formulation and procedure according to Example 1, with modification of the thickness of the transfer tape from 0.025 to 0.25 mm as detailed in Table 7.

Example 31

Construction #31 was prepared using the transfer tape described in Example 1. In place of the core utilized in Example 1, the following core was substituted:
To a one liter mixing vessel equipped with lid was charged: 95 parts IOA, 5 parts AA and 0.04 parts KB-1 photoinitiator. A partially polymerized syrup was prepared from this mixture using the procedure detailed in reference Example R-1. To this syrup was added 0.10 parts additional KB-1 initiator, 0.10 parts 1,6-hexanediol diacrylate, 6 parts hydrophobic silica Aerosil™ R-972 and 2.15 parts Expancel™ 551-DE polymeric microspheres. The core and subsequent attachment tape was then prepared as per reference Example R-4.

Examples 32-37

To a one liter mixing vessel equipped with a lid was charged 510 parts IOA and 150 parts Duradene™ 710. After mixing, 90 parts AA and 1.08 parts KB-1 initiator was introduced. To 100 part aliquots of this mixture was added varying amounts (0, 0.1, 0.25, 0.5, 0.75 or 1.0 parts) of mercaptopropionic acid chain transfer agent, as shown in Table 9. Attachment tapes 32-37 were then prepared as described in Example 1.

10

Table 1

| Example No.: | Ref 1 | Ref 2 | Ref 3 | Ref 4 | Control 1 | Example 1 |
|---|---|---|---|---|---|---|
| IOA/AA (Parts by wt) | 95/5 | 90/10 | 85/15 | *88.5/11.5 | 85/15 | 85/15 |
| 90° Peel Adhesion; E-14; 3 Day/RT Dwell — Avg. Load (N/dm) | 79 | 134 | 48 | 186 | 193 | 497 |
| Fail Mode; if not pop | | | | | | |
| 90° Peel Adhesion; E-14; 1 Hr/70°C Dwell — Avg. Load (N/dm) | 92 | 350 | 175 | 252 | 320 | 633 |
| Fail Mode; if not pop | | | | | | |
| 90° Peel Adhesion; 50 J; 3 Day/RT Dwell — Avg. Load (N/dm) | 144 | 611 | 606 | 429 | 510 | 784 |
| Fail Mode; if not pop | | | | | | FS |
| Cold Slam (-30°C); 50 J; 3 Day/RT Dwell — Delam. during Stage: | 3 | 3 | 2 | 0 | 0 | 3 |
| Failure during Stage: | 3ML4E | 3EML | 3E | 1M2E | 2EM,LL | 3M,LL4M |
| Fail Mode; if not pop | FS/AD | FS/AD | FS/AD | PoptrFS | Pop/AD/FS | FS |
| Cold Slam (-30°C); E-14; 3 Day/RT Dwell — Delam. during Stage: | 2 | 2 | 0 | 0 | 0 | 3 |
| Failure during Stage: | 2EM | 2E | 1E | 2E | 1L,LL2E | 3EM |
| Fail Mode; if not pop | | | | | | Pop/FS |

* 57.5/7.5/35 – IOA/AA methyl methacrylate copolymer

As the data in Table 1 clearly show, adhesion and cold slam performance for the tapes of the invention greatly exceeds that of the state of the art conventional acrylate adhesives (Ref 1-4) as well as that of an identical formulation without elastomer in the adhesive layer (Control 1).

## Table 2

| Paint | Dwell Time | Temp. | 90° Peel (N/dm) (Fail Mode, if not pop) | | |
|---|---|---|---|---|---|
| | | | Ex. 1 | Control 1 | Reference 4 |
| 50 J | 3 Day | RT | 808 FS | 687 | 342 |
| RK-3840 | | | 838 FS | 392 | 261 |
| E-176 | | | 652 FS | 306 | 241 |
| M33J-100 | | | 484 | 221 | 201 |
| Inmont E-14 | | | 359 | 193 | 201 |
| 50 J | 1 Hr. | 70°C | 810 FS | 751 FS | 727 FS/Pop |
| RK-3840 | | | 799 FS | 779 FS/Pop | 335 |
| E-176 | | | 779 FS | 749 FS | 359 |
| M33J-100 | | | 799 FS | 578 FS/Pop | 276 |
| Inmont E-14 | | | 808 FS | 482 | 269 |

Table 2 clearly demonstrates the improved performance of a tape of the invention over both control and reference tapes on a variety of high solids paints. On the basis of this testing, Inmont "E-14" was identified as the most difficult substrate and used for all subsequent testing.

Table 3 (page 27) demonstrates the performance tapes of the invention having various monomer ratios and amounts of elastomer in the adhesive layer. Tapes having high acid and high elastomer levels (e.g., Example 2) show the most improvement.

## Table 3

| Example No.: | 2 | 3 | 4 | 5 | 6 | 7 | 8 | 9 | 10 |
|---|---|---|---|---|---|---|---|---|---|
| Parts IOA/AA | 85/15 | 85/15 | 80/20 | 90/10 | 90/10 | 90/10 | 95/5 | 95/5 | 95/5 |
| Wt% Duradene 710 Added | 20 | 10 | 15 | 20 | 15 | 10 | 20 | 15 | 10 |
| Parts D-710 Added | 25 | 11.1 | 17.6 | 25 | 17.6 | 11.1 | 25 | 17.6 | 11.1 |
| 90°Peel Adhesion; RK-3840 | | | | | | | | | |
|   Avg. Load (N/dm) | 716 | 521 | --- | 315 | 304 | 291 | 219 | 186 | 204 |
|   Fail Mode; if not pop | FS | | | | | | | | |
| 90° Peel Adhesion; E-14 | | | | | | | | | |
|   3 Day/RT Dwell | | | | | | | | | |
|   Avg. Load (N/dm) | 342 | 197 | 57 | 177 | 197 | 190 | 125 | 109 | 134 |
|   Fail Mode; if not pop | | | | | | | | | |
| 90° Peel Adhesion; E-14 | | | | | | | | | |
|   1 Hr/70°C Dwell | | | | | | | | | |
|   Avg. Load (N/dm) | 933 | 751 | 313 | 403 | 383 | 394 | 212 | 199 | 153 |
|   Fail Mode; if not pop | FS | POP/FS | | | | | | | |
| Cold Slam; -30°C; E-14 | | | | | | | | | |
|   3 Day/RT Dwell | | | | | | | | | |
|   Delam. during Stage: | 2 | 0 | --- | 1 | 2 | 2 | 2 | 3 | 2 |
|   Failure during Stage: | 3M,4E+ | 2E,3E | --- | 2E,LL,3E | 2E,3E | 3E | 2EL,3E | 3E | 2L,3E |

EP 0 352 901 B1

Table 4

| Ex. No. | Polymer Added | 90° Peel Adhesion; E-14 Avg. Load (N/dm) | |
|---|---|---|---|
| | | 3 Day/RT Dwell | 1 Hr/70°C Dwell |
| C-1 | ----- | 193 | 320 |
| 1 | Duradene™ 710 | 497 | 633 |
| 11 | Kraton™ 1101 | 449 | 729 FS |
| 12 | Stereon™ 840-A | 379 | 517 |
| 13 | Stereon™ 845-A | 120 | 707 |
| 14 | Stereon™ 720-A | 236 | 339 |
| 15 | Sol™ T 163 | 274 | 455 |
| 16 | Sol™ T 166 | 300 | 416 |
| 17* | Sol™ T 190 | 190 | 271 |
| 18* | Sol™ T 193A | 252 | 361 |
| 19* | Sol™ T 193B | 234 | 339 |
| 20 | Duradene™ 707 | 182 | 252 |
| 21* | Duradene™ 711 | 169 | 219 |
| 22* | Duradene™ 713 | 169 | 232 |
| 23 | Kraton™ 1107 | 250 | 427 |
| 24* | Kraton™ G 1657 | 171 | 131 |
| Note: Fail mode pop in all examples. | | | |

* Comparative examples.

Table 4A

| Ex. No. | Polymer Added | Cold Slam; -30°C; E-14 3 Day/RT Dwell | | |
|---|---|---|---|---|
| | | Delam during Stage | Failure during Stage | Fail Mode; if not pop |
| 1 | Duradene™ 710 | 2 | 3EM | Pop/FS |
| 11 | Kraton™ 1101 | 3 | 3EM | FS/Pop |
| 12 | Stereon™ 840-A | 3 | 3E | Pop/FS |
| 13 | Stereon™ 845-A | 0 | 2E3E | Pop/FS |
| 14 | Stereon™ 720-A | 3 | 3ML | Pop/FS |
| 15 | Sol™ T 163 | 3 | 3EM | Pop/FS |
| 16 | Sol™ T 166 | 3 | 3E | Pop/FS |
| 17* | Sol™ T 190 | 2 | 2ML,LL3E | PoptrFS |
| 18* | Sol™ T 193A | 2 | 2L,LL3E | Pop/FS |
| 19* | Sol™ T 193B | 2 | 3E | PoptrFS |
| 20* | Duradene™ 707 | 2 | 3E | PoptrFS |
| 21* | Duradene™ 711 | 2 | 3E | PoptrFS |
| 22* | Duradene™ 713 | 2 | 2EL,LL3E | PoptrFS |
| 23 | Kraton™ 1107 | 0 | 2M3E | PoptrFS |
| 24* | Kraton™ G 1657 | 0 | 2E | PoptrAD |

* Comparative examples.

Table 4A demonstrates the improved cold slam performance of tapes wherein the adhesive layer comprises various elastomers having unsaturated segments.

Table 5 shows that pressure-sensitive adhesive tape of the invention having an adhesive layer comprising NVP gives markedly improved adhesion over both the state of the art conventional adhesive tape and a control tape having no elastomer in the adhesive layer.

### Table 5

| Example No.: | Control 2 | 25 | 26 | Reference 4 |
|---|---|---|---|---|
| Description: | | | | |
| IOA/NVP Ratio | 70/30 | 70/30 | 80/20 | |
| 90° Peel Adhesion; E-14 3 Day/RT Dwell Avg. Load (N/dm) Fail Mode; if not pop | 245 | 482 | 366 | 204 |
| 90° Peel Adhesion; E-14 2 Min/RT Dwell Avg. Load (N/dm) Fail Mode; if not pop | 112 | 241 | 206 | 131 |
| 90° Peel Adhesion; E-14 1 Hr./70°C Dwell Avg. Load (N/dm) Fail Mode; if not pop Addt'l Observation | 258 | 545 | 335 | 232 |
| Cold Slam; -30°C; E-14 Delam. during Stage: Failure during Stage: Fail Mode; if not pop | 0 1ML,LL | 0 2L,LL3E PoptrFS | 2 3EM PopAD | 0 2E |

Table 6

| Example No.: | Control 1 | 1 | 27 |
|---|---|---|---|
| Description: | | | |
| Parts IOA/AA<br>D-710 Wt%<br>Thickness (mm) | 85/15<br>0<br>0.05 | 85/15<br>20<br>0.05 | 85/15<br>25<br>0.05 |
| 90° Peel Adhesion; E-14 3 Day/RT Dwell | | | |
| Avg. Load (N/dm)<br>Fail Mode; if not pop | 48 | 497 | 525 |
| 90° Peel Adhesion; E-14 1 Hr/70°C Dwell | | | |
| Avg. Load (N/dm)<br>Fail Mode; if not pop | 320 | 633 | 666<br>FS |
| Cold Slam; -30°C; E-14 3 Day/RT Dwell | | | |
| Delam. during Stage:<br>Failure during Stage:<br>Fail Mode; if not pop | 0<br>2E | 3<br>3EM<br>Pop/FS | 3<br>3EML<br>FS/Pop |

Table 6 demonstrates the effectiveness of a pressure-sensitive adhesive tape having an adhesive layer with a higher percentage of the preferred elastomer.

Table 7

| Example No.: | 28 | 1 | 29 | 30 | Ref. 4 |
|---|---|---|---|---|---|
| Description: | | | | | |
| Parts IOA/AA<br>D-710 Wt%<br>Thickness (mm) | 85/15<br>20<br>0.025 | 85/15<br>20<br>0.05 | 85/15<br>20<br>0.127 | 85/15<br>20<br>0.254 | Control<br><br>0.05 |
| 90° Peel Adhesion; E-14 3 Day/RT Dwell | | | | | |
| Avg. Load (N/dm)<br>Fail Mode; if not pop | 458 | 497 | 429 | 403 | 186 |
| 90° Peel Adhesion; E-14 1 Hr/70°C Dwell | | | | | |
| Avg. Load (N/dm)<br>Fail Mode; if not pop | 549 | 633 | 620 | 736 | 234<br>Pop/FS |
| Cold Slam; -30°C; E-14 3 Day/RT Dwell | | | | | |
| Delam. during Stage:<br>Failure during Stage:<br>Fail Mode; if not pop | 3<br>3EM<br>FS/Pop | 3<br>3EM<br>FS/Pop | 3<br>3ML,LL4M<br>Pop/FS | 3<br>4ML,LL<br>Pop/FS | 0<br>2E |

Table 7 demonstrates that pressure-sensitive adhesive tapes of the invention perform better than the best reference even when the thickness is varied.

Table 8

| Example No.: | 31 | 1 |
|---|---|---|
| Thickness (mm) <br> Part IOA/AA in Core | 0.05 <br> 95/5 | 0.05 <br> 87.5/12.5 |
| 90° Peel Adhesion; E-14 3 Day Dwell/RT | | |
| Avg. Load (N/dm) <br> Fail Mode; if not pop | 344 | 392 |
| 90° Peel Adhesion; E-14 1 Hr/70°C Dwell | | |
| Avg. Load (N/dm) <br> Fail Mode; if not pop | 655 <br> FS/Pop | 928 <br> FS/Pop |
| Cold Slam; -30°C; E-14 | | |
| Delam. at Stage: <br> Failure at Stage: <br> Fail Mode; if not pop | 3 <br> 4EML <br> Pop/FS | 2 <br> 3ML,LL <br> Pop/AD |

Table 8 shows results for pressure-sensitive adhesive tapes having acrylic copolymer core layers of varying ratios. As can be seen, both give excellent results, with the tape having a lower AA containing core exhibiting the best cold slam and the tape with the higher AA containing core exhibiting the best adhesion.

Table 9

| Example No.: | Control 1 | 32 | 33 | 34 | 35 | 36 | 37 | Reference 4 |
|---|---|---|---|---|---|---|---|---|
| Description: | | | | | | | | |
| Wt% Mercapto-propionic acid | 0 | 0 | 0.1 | 0.25 | 0.5 | 0.75 | 1.0 | 0 |
| 90° Peel Adhesion; E-14 3 Day/RT Dwell | | | | | | | | |
| Avg. Load (N/dm) | 162 | 377 | 499 | 514 | 707 | 792 | 355 | 204 |
| Fail Mode; if not pop | | | | | FS | FS/Pop | | |
| 90° Peel Adhesion; E-14 2 Min/RT Dwell | | | | | | | | |
| Avg. Load (N/dm) | 44 | 81 | 116 | 116 | 112 | 136 | 182 | 131 |
| Fail Mode; if not pop | | | | | | | | |
| 90° Peel Adhesion; E-14 1 Hr/70°C Dwell | | | | | | | | |
| Avg. Load (N/dm) | 320 | 495 | 751 | 740 | 512 | 571 | 250 | 232 |
| Fail Mode; if not pop | | | Pop/FS | Pop/FS | | | | |
| Cold Slam; -30°C; E-14 | | | | | | | | |
| Delam. during stage: | 0 | 2 | 2 | 2 | 2 | 2 | 2 | 0 |
| Failure during Stage: | 1L,LL2E | 3EM | 3EM | 3E | 3E | 2EM,LL | 2E | 2E |
| Fail Mode; if not pop | | Pop/FS | Pop/FS | Pop/FS | Pop trFS | Pop trFS | | |

Table 9 demonstrates the increased adhesion of pressure-sensitive adhesive tapes containing various amounts of a chain transfer agent, mercaptopropionic acid in the adhesive layer. All adhesive layers contain identical formulations except for the chain transfer agent.

**EP 0 352 901 B1**

## Claims

1. Use on a tape as pressure-sensitive adhesive of a phase-separated ultraviolet-radiation polymerized pressure-sensitive adhesive layer comprising
   a) from 65 parts to 95 parts of an acrylic copolymer of monomers containing:
      i. from 60 to 90 parts of an alkyl acrylate monomer, the alkyl groups of which have an average of 4 to 12 carbon atoms,
      ii. correspondingly, from 40 parts to 10 parts of a monoethylenically unsaturated polar copolymerizable monomer, and
      iii. from 0.01 part to 1 part of a photoinitiator, and
   b) correspondingly, from 35 parts to 5 parts of a hydrocarbon elastomer or blend of hydrocarbon elastomers, each of said elastomers comprising at least one unsaturated segment having a lower $T_g$ than said acrylic copolymer,
   said adhesive layer having at least a first phase and a second phase, said first phase consisting primarily of said elastomer, said second phase consisting primarily of said acrylic copolymer, wherein said pressure-sensitive adhesive tape has improved adhesion to painted surfaces and low temperature shock performance than an otherwise identical adhesive tape wherein the adhesive layer contains no hydrocarbon elastomer.

2. Use on a tape according to claim 1 wherein said unsaturated segment of said elastomer having a lower glass transition temperature than the acrylic copolymer comprises at least 50% by weight of the elastomer wherein said adhesive layer comprises from 10 parts to 25 parts of said hydrocarbon elastomer.

3. Use according to either of claims 1 or 2 wherein said hydrocarbon elastomer is selected from the group consisting of styrene-butadiene multiblock copolymers, and butadiene styrene copolymers.

4. Use according to any preceding claim wherein said adhesive layer comprises an acrylic copolymer of monomers containing:
   a) from 60 parts to 90 parts of an alkyl acrylate ester selected from the group consisting of isooctyl acrylate, isononyl acrylate, decyl acrylate, dodecyl acrylate, butyl acrylate, ethyl-hexyl acrylate and hexyl acrylate,
   b) correspondingly from 40 parts to 10 parts of a monoethylenically unsaturated polar copolymerizable monomer selected from the group consisting of acrylic acid, and N-vinylpyrrolidone.

5. Use according to claim 4 wherein said adhesive layer comprises an acrylic copolymer of monomers containing:
   a) from 80 parts to 90 parts isooctyl acrylate and
   b) correspondingly, from 10 parts to 20 parts acrylic acid.

6. Use according to any preceding claim wherein said tape further comprising a core layer.

7. Use according to claim 6 wherein said core layer comprises a single-phase ultraviolet-radiation polymerised acrylic copolymer.

8. Use according to claim 7 wherein said single-phase ultraviolet-radiation polymerized acrylic copolymer comprises from 95 parts to 99 parts of said alkyl acrylate monomer, and correspondingly, from 5 parts to 1 part of said strongly polar copolymerizable monomer.

9. Use according to claim 6 wherein said core comprises a polymeric material selected from the group consisting of polyethylene, polypropylene, polyacrylates, neoprene, polyolefin and polyurethane.

10. Use according to any preceding claim wherein said adhesive layer further comprises a chain transfer agent.

19

**Patentansprüche**

1. Verwendung auf einem Bandes als Haftklebstoff einer getrenntphasigen, mit ultravioletter Strahlung polymerisierten Haftklebstoffschicht, umfassend:

(a) 65...95 Teile Acryl-Copolymer von Monomeren, enthaltend:

i. 60...90 Teile Alkylacrylat-Monomer, dessen Alkylgruppen durchschnittlich 4...12 Kohlenstoffatome aufweisen,

ii. dementsprechend 40...10 Teile monoethylenisch ungesättigtes, polares, copolymerisierbares Monomer und

iii. 0,01...1 Teil Photoinitiator, sowie

(b) dementsprechend 35...5 Teile Kohlenwasserstoff-Elastomer oder Blend von Kohlenwasserstoff-Elastomeren, wobei jedes der Elastomere mindestens ein ungesättigtes Segment mit einer niedrigeren $T_g$ als die des Acryl-Copolymers aufweist,

welche Klebstoffschicht mindestens eine erste Phase und eine zweite Phase aufweist, wobei die erste Phase hauptsächlich aus dem Elastomer besteht und die zweite Phase hauptsächlich aus dem Acryl-Copolymer besteht, welches Haftklebeband verbesserte(s) Haftung an gestrichenen Oberflächen und Kaltschlagverhalten aufweist als ein ansonsten identisches Klebeband, bei dem die Klebstoffschicht kein Kohlenwasserstoff-Elastomer enthält.

2. Verwendung eines Bandes nach Anspruch 1, bei welchem das ungesättigte Segment des Elastomers, das eine niedrigere Glasübergangstemperatur als das Acryl-Copolymer hat, mindestens 50 Gewichtsprozent Elastomer umfaßt und bei welchem die Klebstoffschicht 10...25 Teile des Elastomers umfaßt.

3. Verwendung nach Anspruch 1 oder 2, wobei das Kohlenwasserstoff-Elastomer ausgewählt wird aus der Gruppe, bestehend aus Styrol/Butadien-Multiblockcopolymeren und Butadien/Styrol-Copolymeren.

4. Verwendung nach einem der vorgenannten Ansprüche, wobei die Klebstoffschicht ein Acryl-Copolymer von Monomeren umfaßt, enthaltend:

(a) 60...90 Teile eines Alkylacrylatesters, ausgewählt aus der Gruppe, bestehend aus Isooctylacrylat, Isononylacrylat, Decylacrylat, Dodecylacrylat, Isononylacrylat, Butylacrylat, Ethyl-hexylacrylat und Hexylacrylat,

(b) dementsprechend 40...10 Teile eines monoethylenisch ungesättigten, polaren, copolymerisierbaren Monomers, ausgewählt aus der Gruppe, bestehend aus Acrylsäure und N-Vinylpyrrolidon.

5. Verwendung nach Anspruch 4, wobei die Klebstoffschicht ein Acryl-Copolymer von Monomeren ist, enthaltend:

(a) 80...90 Teile Isooctylacrylat und

(b) dementsprechend 10...20 Teile Acrylsäure.

6. Verwendung nach einem der vorgenannten Ansprüche, wobei das Band ferner eine Kernlage umfaßt.

7. Verwendung nach Anspruch 6, wobei die Kernlage ein einphasiges, durch ultraviolette Strahlung polymerisiertes Acryl-Copolymer umfaßt.

8. Verwendung nach Anspruch 7, wobei das einphasige, durch ultraviolette Strahlung polymerisierte Acryl-Copolymer 95...99 Teile des Alkylacrylat-Monomers und dementsprechend 5...1 Teil des stark polaren, copolymerisierbaren Monomers umfaßt.

9. Verwendung nach Anspruch 6, wobei der Kern ein polymeres Material umfaßt, ausgewählt aus der Gruppe, bestehend aus Polyethylen, Polypropylen, Polyacrylaten, Neopren, Polyolefin und Polyurethan.

10. Verwendung nach einem der vorgenannten Ansprüche, wobei die Klebstoffschicht ferner ein Kettenübertragungsmittel aufweist.

**Revendications**

1. Utilisation sur un ruban comme adhésif sensible à la pression d'une couche d'adhésif sensible à la pression polymérisée par un rayonnement ultraviolet séparé en phases comprenant

a) de 65 parties à 95 parties d'un copolymère acrylique de monomères contenant :

i) de 60 à 90 parties d'un monomère d'acrylate d'alkyle, dont les groupes alkyle comportent une moyenne de 4 à 12 atomes de carbone,

ii) parallèlement, de 40 parties à 10 parties d'un monomère copolymérisable polaire monoethyléniquement insaturé, et

iii) de 0,01 partie à 1 partie d'un photoinitiateur, et

b) parallèlement, de 35 parties à 5 parties d'un élastomère hydrocarboné ou d'un mélange d'élastomères hydrocarbonés, chacun de ces élastomères comprenant au moins un segment insaturé ayant une $T_g$ inférieure à celle du copolymère acrylique,

la couche d'adhésif comportant au moins une première phase et une seconde phase, la première phase se composant principalement de l'élastomère, la seconde phase se composant principalement du copolymère acrylique, dans laquelle le ruban d'adhésif sensible à la pression a une adhérence aux surfaces peintes et une performance au choc à basse température améliorées comparativement à un ruban adhésif par ailleurs identique dans lequel la couche d'adhésif ne contient pas d'élastomère hydrocarboné.

2. Utilisation sur un ruban suivant la revendication 1, dans laquelle le segment insaturé de l'élastomère ayant une température de transition vitreuse inférieure à celle du copolymère acrylique constitue au moins 50 % en poids de l'élastomère, la couche d'adhésif comprenant de 10 parties à 25 parties de l'élastomère hydrocarboné susdit.

3. Utilisation suivant l'une ou l'autre des revendications 1 et 2, dans laquelle l'élastomère hydrocarboné est choisi dans le groupe comprenant les copolymères multiblocs de styrène-butadiène et les copolymères de butadiène-styrène.

4. Utilisation suivant l'une quelconque des revendications précédentes, dans laquelle la couche d'adhésif comprend un copolymère acrylique de monomères contenant :

a) de 60 parties à 90 parties d'un ester d'acrylate d'alkyle choisi dans le groupe comprenant l'acrylate d'isooctyle, l'acrylate d'isononyle, l'acrylate de décyle, l'acrylate de dodécyle, l'acrylate de butyle, l'acrylate d'éthyl hexyle et l'acrylate d'hexyle,

b) parallèlement, de 40 parties à 10 parties d'un monomère copolymérisable polaire monoéthyléniquement insaturé choisi dans le groupe comprenant l'acide acrylique et la N-vinylpyrrolidone.

5. Utilisation suivant la revendication 4, dans laquelle la couche d'adhésif comprend un copolymère acrylique de monomères contenant :

a) de 80 à 90 parties d'acrylate d'isooctyle et

b) parallèlement, de 10 parties à 20 parties d'acide acrylique.

6. Utilisation suivant l'une quelconque des revendications précédentes, dans laquelle le ruban comprend en outre une couche formant noyau.

7. Utilisation suivant la revendication 6, dans laquelle la couche formant noyau comprend un copolymère acrylique polymérisé par rayonnement ultraviolet à une seule phase.

8. Utilisation suivant la revendication 7, dans laquelle le copolymère acrylique polymérisé par rayonnement ultraviolet à une seule phase comprend de 95 parties à 99 parties du monomère d'acrylate d'alkyle et, parallèlement, de 5 parties à 1 partie du monomère copolymérisable fortement polaire.

9. Utilisation suivant la revendication 6, dans laquelle le noyau comprend une matière polymérique choisie dans le groupe comprenant le polyéthylène, le polypropylène, les polyacrylates, le néoprène, les polyoléfines et les polyucéthannes.

10. Utilisation suivant l'une quelconque des revendications précédentes, dans laquelle la couche d'adhésif comprend de plus un agent de transfert de chaîne.

Fig. 1

Fig. 2

Fig. 3

Fig. 4